# EUROPEAN PATENT APPLICATION

(11) **EP 4 756 749 A1**
(43) Date of publication of application: **10.06.2026**
(21) Application number: 25218257.1
(22) Date of filing: 25.11.2025
(51) Int. Cl.: G07C 5/08, B60W 60/00, G07C 5/00

(54) **DATA EXTRACTION FOR DATA STORAGE SYSTEM FOR AUTOMATED DRIVING**

(30) Priority: 06.12.2024 KR 20240180516
(71) Applicant: Hyundai Motor Company, Seoul 06797 (KR); Kia Corporation, Seoul 06797 (KR)
(72) Inventor: HAN, Jang Soon, 18280 Hwaseong-si, Gyeonggi-do (KR)
(74) Representative: Viering, Jentschura & Partner mbB Patent- und Rechtsanwälte

(57) **Abstract**

A Data Storage System for Automated Driving Vehicles (DSSAD) data extraction method may be provided. A DSSAD data extraction system may transmit an Event Data Recorder (EDR) data request to the EDR data storage device and receive an EDR data from the EDR data storage device; transmit a DSSAD data request and receive a DSSAD data from the DSSAD data storage device; specify the DSSAD data to be analyzed from the received DSSAD data; determine whether an event corresponding to the EDR data exists in the DSSAD data to be analyzed; and extract DSSAD data such that the recording time may be included within a predetermined time range based on the event occurrence time of the EDR data from the DSSAD data to be analyzed if it may be determined that an event corresponding to the EDR data exists in the DSSAD data to be analyzed.

## Description

### CROSS-REFERENCE TO RELATED APPLICATION

This application claims priority to and the benefit of Korean Patent Application No. 10-2024-0180516 filed with the Korean Intellectual Property Office on December 6, 2024, the entire contents of which are incorporated herein by reference.

### BACKGROUND

### (a) Technical Field

The present disclosure relates to a Data Storage System for Automated Driving (DSSAD) data extraction method.

### (b) Description of the Related Art

A Data Storage System for Automated Driving (DSSAD) is a data storage system for autonomous vehicles that may ensure a safety and reliability of an autonomous driving technology. The DSSAD may record key events and data that occur during the vehicle operation and is used for an accident investigation, a legal liability determination, and a system improvement. In particular, it DSSADs may be configured to meet laws and technical standards of each country, and for this purpose, the DSSAD might be required to store and manage accurate and reliable data. Additionally, when extracting existing Event Data Recorder (EDR) data, there is a need to extract DSSAD data together. This enables integrated analysis of the interaction between the autonomous driving system and the driver, as well as environmental information at the time of the accident, thereby providing more comprehensive data.

### SUMMARY

The task to be solved is to provide a method for extracting DSSAD data may be extracted together with EDR data extraction.

A DSSAD data extraction method according to an example as a DSSAD data extraction method performed in a DSSAD data extraction system that may comprise, for example, a data extraction device, an Event Data Recorder (EDR) data storage device, and/or a DSSAD data storage device. The method may include transmitting, by the data extraction device, an EDR data request to the EDR data storage device and receiving an EDR data from the EDR data storage device; transmitting, by the data extraction device, a DSSAD data request to the DSSAD data storage device and receiving a DSSAD data from the DSSAD data storage device; specifying, by the data extraction device, the DSSAD data to be analyzed from the received DSSAD data; determining, by the data extraction device, whether an event corresponding to the EDR data exists in the DSSAD data to be analyzed; and extracting, by the data extraction device, a DSSAD data where the recording time is included within a predetermined time range based on the event occurrence time of the EDR data from the DSSAD data to be analyzed if it is determined that an event corresponding to the EDR data exists in the DSSAD data to be analyzed.

In some examples, the method may further include extracting, by the data extraction device, the DSSAD data closest in time to a point prior to the predetermined time range from the DSSAD data to be analyzed if it is determined that an event corresponding to the EDR data does not exist in the DSSAD data to be analyzed.

In some examples, the received DSSAD may include a DSSAD data having different regional attributes for each occurrence region, and specifying the DSSAD data to be analyzed may include specifying, by the data extraction device, a DSSAD data having the same regional attribute as the incident occurrence region of the EDR data from the received DSSAD data as the DSSAD data to be analyzed.

In some examples, the regional attribute may be determined according to the country where the event of the EDR data occurred.

In some examples, transmitting, by the data extraction device, the DSSAD data request to the DSSAD data storage device and receiving the DSSAD data from the DSSAD data storage device may include transmitting, by the data extraction device, a DSSAD data request to the DSSAD data storage device together with information on the same regional attribute as the incident occurrence region of the EDR data; and receiving, by the data extraction device, the DSSAD data limited to the regional attribute identical to the event occurrence region of the EDR data from the DSSAD.

In some examples, the method may further include generating, by the data extraction device, a DSSAD report linked to the EDR data based on the extracted DSSAD data.

In some examples, the recording time of the DSSAD data displayed in the DSSAD report may be expressed as a difference value from the event occurrence time of the EDR data.

A DSSAD data extraction method according to an example as a DSSAD data extraction method performed in a DSSAD data extraction system including a data extraction device, an EDR data storage device, and a DSSAD data storage device, may include transmitting, by the data extraction device, an EDR data request to the EDR data storage device and receiving an EDR data from the EDR data storage device; confirming, by the data extraction device, the event occurrence time of the EDR data; transmitting, by the data extraction device, a DSSAD data request together with information regarding the occurrence time of the EDR data to the DSSAD data storage device; specifying, by the DSSAD data storage device, the DSSAD data to be analyzed from the held DSSAD data; determining, by the DSSAD data storage device, whether an event corresponding to the EDR data exists in the DSSAD data to be analyzed; extracting, by the DSSAD data storage device, the DSSAD data where the recording time is included within a predetermined time range based on the event occurrence time of the EDR data from the DSSAD data to be analyzed if it is determined that the EDR data exists in the DSSAD data to be analyzed; and transmitting, by the DSSAD data storage device, the extracted DSSAD data to the data extraction device.

In some examples, the method may further include extracting, by the DSSAD data storage device, the DSSAD data closest in time to a point prior to the predetermined time range from the DSSAD data to be analyzed if it is determined that an event corresponding to the EDR data does not exist in the DSSAD data to be analyzed.

In some examples, the held DSSAD may include the DSSAD data with different regional attributes for each occurrence region, and specifying the DSSAD data to be analyzed above may include specifying, by the DSSAD data storage device, the DSSAD data having the same region attribute as the incident occurrence region of the EDR data from the DSSAD data held as the DSSAD data to be analyzed.

In some examples, the regional attribute may be determined based on the country where the event of the EDR data occurred.

In some examples, transmitting, by the data extraction device, the DSSAD data request together with the information about the occurrence time of the EDR data to the DSSAD data storage device may include transmitting, by the data extraction device, the DSSAD data request to the DSSAD data storage device together with the information regarding the event occurrence time of the EDR data and the information regarding the regional attribute identical to the event occurrence region of the EDR data.

In some examples, the method may further include generating, by the data extraction device, the DSSAD report linked to the EDR data based on the DSSAD data received from the DSSAD data storage device.

In some examples, the recording time of the DSSAD data displayed in the DSSAD report may be expressed as a difference value from the event occurrence time of the EDR data.

A DSSAD data extraction system may include a data extraction device, an Event Data Recorder (EDR) and a DSSAD data storage device. A method performed by the system may include transmitting, by the data extraction device, an EDR data request to an EDR and DSSAD data storage device and receiving an EDR data from the EDR and DSSAD data storage device; confirming, by the data extraction device, the event occurrence time of the EDR data; transmitting, by the data extraction device, a DSSAD data request together with information about the occurrence time of the EDR data to the EDR and DSSAD data storage device; specifying, by the EDR and DSSAD data storage device, the DSSAD data to be analyzed from the DSSAD data held; determining, by the EDR and DSSAD data storage device, whether an event corresponding to the EDR data exists in the DSSAD data to be analyzed; extracting, by the EDR and DSSAD data storage device, the DSSAD data where the recording time is included within a predetermined time range based on the event occurrence time of the EDR data from the DSSAD data to be analyzed if it is determined that the EDR data exists in the DSSAD data to be analyzed; and transmitting, by the EDR and DSSAD data storage device, the extracted DSSAD data to the data extraction device.

In some examples, the method may further include extracting, by the EDR and DSSAD data storage device, the DSSAD data closest in time to a point prior to the predetermined time range from the DSSAD data to be analyzed if it is determined that an event corresponding to the EDR data does not exist in the DSSAD data to be analyzed.

In some examples, the held DSSAD may include a DSSAD data with different regional properties for each occurrence region, and specifying the DSSAD data to be analyzed may include specifying, by the EDR and DSSAD data storage device, the DSSAD data having the same regional attribute as the event occurrence region of the EDR data among the held DSSAD data as the DSSAD data to be analyzed.

In some examples, the regional attribute may be determined based on the country where the event of the EDR data occurred.

In some examples, transmitting, by the EDR and DSSAD data storage device, the DSSAD data request together with the information about the occurrence time of the EDR data to the EDR and DSSAD data storage device may include transmitting, by the EDR and DSSAD data storage device, the DSSAD data request to the EDR and DSSAD data storage device together with the information regarding an event occurrence time of the EDR data and the information regarding a reginal attribute identical to an event occurrence region of the EDR data.

In some examples, the method may further include generating, by the EDR and DSSAD data storage device, a DSSAD report linked to the EDR data based on the DSSAD data received from the EDR and DSSAD data storage device, and wherein the recording time of the DSSAD data displayed in the above DSSAD report may be expressed as a difference value from the event occurrence time of the EDR data.

For example, a computing device may be configured to manage data during automated driving of a vehicle. That computing device may receive, from an event data recorder associated with the vehicle, event data corresponding a vehicle event. The computing device may then receive, from Data Storage System for Automated Driving (DSSAD) system, DSSAD data indicating one or more measurements of autonomous driving of the vehicle and identify, based on the event data, time information of an event data recorder trigger. That the time information may be associated with at least one of a start time corresponding to the vehicle event; or an end time corresponding to the vehicle event. The computing device may extract, from the DSSAD data, based on the time information of the event data recorder trigger, and based on the end time, a portion of the DSSAD data; and transmit, based on the portion of the DSSAD data, information indicating the one or more measurements of the autonomous driving of the vehicle during the vehicle event.

### BRIEF DESCRIPTION OF THE DRAWINGS

FIG. 1 is a diagram illustrating a Data Storage System for Automated Driving (DSSAD) data extraction system.
FIG. 2 is a diagram illustrating a DSSAD data extraction system.
FIG. 3 is a diagram illustrating a DSSAD data extraction system.
FIG. 4 and FIG. 5 are views for explaining an operation of a DSSAD data extraction system.
FIG. 6 is a diagram illustrating a DSSAD data extraction system.
FIG. 7 is a diagram for explaining a DSSAD data extraction method.
FIG. 8 is a diagram for explaining a DSSAD data extraction method.
FIG. 9 is a diagram for explaining a DSSAD data extraction method.
FIG. 10 is a view for explaining a computing device.

### DETAILED DESCRIPTION

Hereinafter, the present disclosure will be described more fully hereinafter with reference to the accompanying drawings, in which examples of the disclosure are shown. As those skilled in the art would realize, the described examples may be modified in various different ways, all without departing from the spirit or scope of the present disclosure. Accordingly, the drawings and description are to be regarded as illustrative in nature and not restrictive. Like reference numerals designate like elements throughout the specification.

In addition, unless explicitly described to the contrary, the word "comprise," and variations such as "comprises" or "comprising," will be understood to imply the inclusion of stated elements but not the exclusion of any other elements. Terms including ordinal numbers such as first, second, and the like will be used only to describe various components, and are not interpreted as limiting these components. The terms are only used to differentiate one component from other components.

In the present disclosure, each of phrases such as "A or B," "at least one of A and B," "at least one of A or B," "A, B or C," "at least one of A, B and C," may include any one or all possible combinations of the items listed together in the corresponding one of the phrases. For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random-access memory (RAM), a read only memory (ROM), a non-volatile random access memory (NVRAM), a programmable read only memory (PROM), an erasable programmable read only memory (EPROM), an electrically erasable programmable read only memory (EEPROM), a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium in order to be executed on a computer. The medium may either continuously store a computer-executable program or temporarily store the program for execution or download. Furthermore, the medium may be a variety of recording or storage means in the form of a single hardware device or multiple combined hardware devices, and is not limited to media directly connected to some computer system but may also be distributed across a network. Examples of such media include magnetic media such as a hard disk, a floppy disk, or a magnetic tape, optical recording media such as a CD-ROM or a DVD, magneto-optical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein.

One or more features associated with autonomous driving control may be activated based on configured autonomous driving control setting(s) (e.g., based on at least one of: an autonomous driving classification, a selection of an autonomous driving level for a vehicle, etc.). Based on one or more features (e.g., features of the extracted portion(s) of the DSSAD data, EDR data, etc.) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., features of the extracted portion(s) of the DSSAD data, EDR data, etc.) described herein.

One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., features of the extracted portion(s) of the DSSAD data, EDR data, etc.) described herein.

Minimum risk maneuver (MRM) operation(s) may also be controlled, for example, based on one or more features (e.g., features of the extracted portion(s) of the DSSAD data, EDR data, etc.) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., features of the extracted portion(s) of the DSSAD data, EDR data, etc.) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane. The driving control apparatus may identify or determine a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., features of the extracted portion(s) of the DSSAD data, EDR data, etc.) described herein. An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

An autonomous driving level and/or autonomous driving activation/deactivation may also be controlled, for example, based on one or more features (e.g., features of the extracted portion(s) of the DSSAD data, EDR data, etc.) described herein. A driving control apparatus may perform an autonomous driving level control (e.g., a change of an autonomous driving level, a change of a required user attentiveness, etc.) or cause deactivation of an autonomous driving operation. For example, by changing the required user attentiveness, the driver may be required to place his/her hands on the driving wheel more often (e.g., at least once in a threshold time period, such as five second, 30 seconds, 1 minute, etc.). By changing the required user attentiveness, the driver may be required to look ahead more often (e.g., at least once in a threshold time period, such as five second, 30 seconds, 1 minute, etc.). By changing the autonomous driving level, one or more video contents might not be displayed on a display of the vehicle.

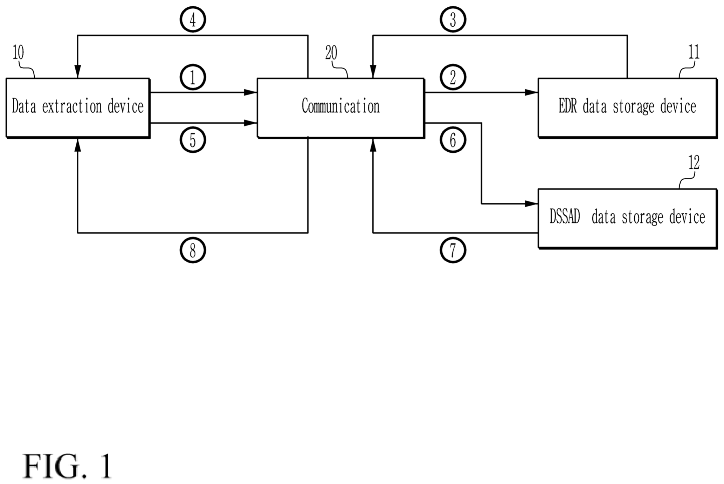

FIG. 1 is a diagram illustrating a DSSAD data extraction system according to one example.

Referring to FIG. 1, an in-vehicle diagnostic communication procedure in the DSSAD data extraction system may be as follows. First, when an Event Data Recorder (EDR) data extraction request occurs in an data extraction device 10 (①), the request may be transmitted to the communication gateway 20 (②), and an EDR report may be generated from the EDR data storage device 11 and may be transmitted (③) and transmitted (④). At the same time, the DSSAD data request linked to the EDR may be formed in the data extraction device 10 (⑤), and the corresponding request signal may be transmitted to the DSSAD data storage device 12 (⑥). As a result, the EDR-linked DSSAD event data extracted from the DSSAD data storage device 12 may be transmitted (⑦) and finally transferred (⑧) to the data extraction device 10. Through this process, the EDR data and the DSSAD data may be managed and provided in an integrated manner.

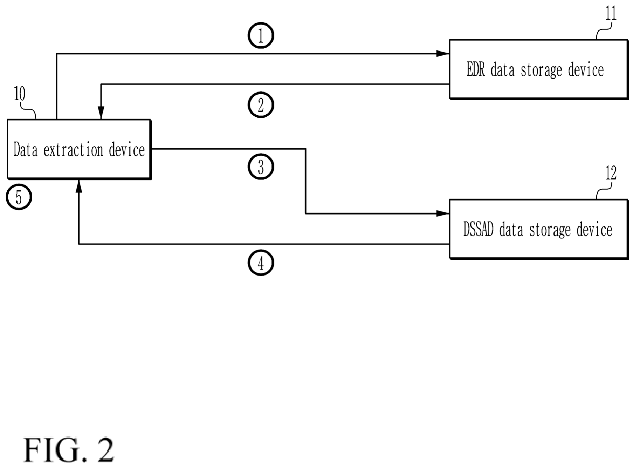

FIG. 2 is a diagram illustrating a DSSAD data extraction system according to one example.

Referring to Figure 2, the procedure for generating the EDR-linked DSSAD report may be as follows. When the EDR data request may be made from the data extraction device 10 to the EDR data storage device 11 (①), the EDR data may be obtained from the EDR data storage device 11 (②). Next, the DSSAD data linked to the EDR may be may be requested (③) from the data extraction device 10 to the DSSAD data storage device 12, and the DSSAD data may be transmitted (④) from the DSSAD data storage device 12 to the data extraction device 10 according to the request. Thereafter, the data extraction device 10 may extract all DSSAD data within -30 seconds of the EDR occurrence time among the entire DSSAD data (⑤). However, if there may be no EDR trigger information in the DSSAD data, only the DSSAD data closest to the EDR reference time may be displayed.

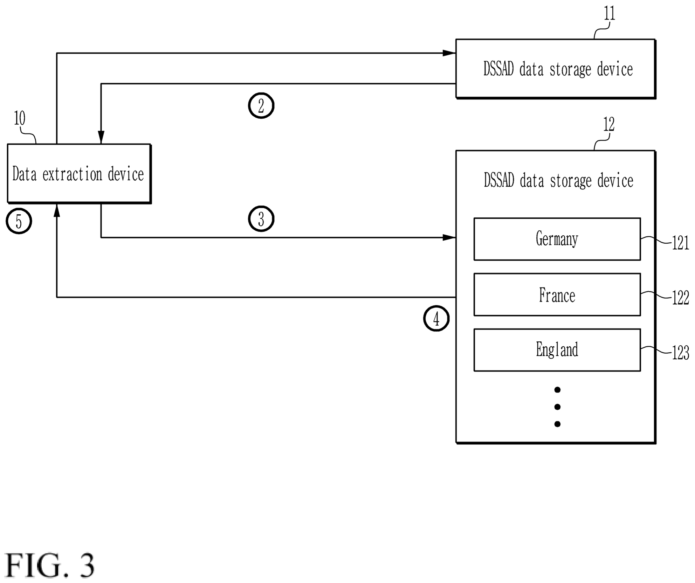

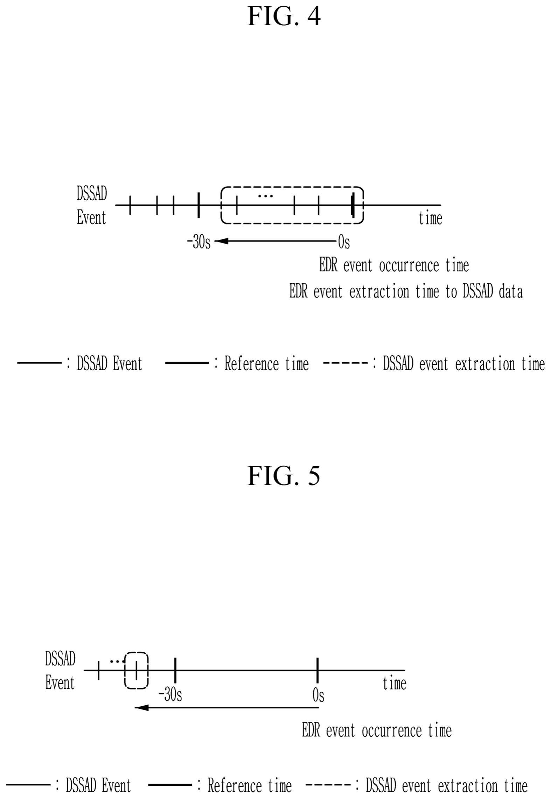

FIG. 3 is a view for explaining a DSSAD data extraction system according to one example, and FIG. 4 and FIG. 5 are view for explaining an operation of a DSSAD data extraction system according to one example.

Referring to FIG. 3, the procedure for generating the EDR-linked DSSAD report may be as follows. When the EDR data request may be made from the data extraction device 10 to the EDR data storage device 11 (①), the corresponding data may be transmitted (②) from the EDR data storage device 11 to the data extraction device 10. Thereafter, the request for transmitting the DSSAD data linked to EDR may be performed from the data extraction device 10 to the DSSAD data storage device 12 (③), and the DSSAD data may be extracted (④) from the DSSAD data storage device 12. In this process, data may be extracted based on information of countries such as Germany 121, France 122, and United Kingdom 123, and the DSSAD event at the same time as the EDR trigger among the DSSAD events where EDR triggers occurred. The DSSAD event may be processed in two cases: (a) when there may be the EDR event, as shown in FIG. 4, all DSSAD event within -30 seconds based on the EDR occurrence time among the entire DSSAD data are extracted, and the EDR event time may be set to 0 seconds. (b) If there may be no EDR event, only the last event among the DSSAD event records may be extracted, as shown in FIG. 5. Finally, the EDR DSSAD report may be generated (⑤) based on the linked DSSAD data.

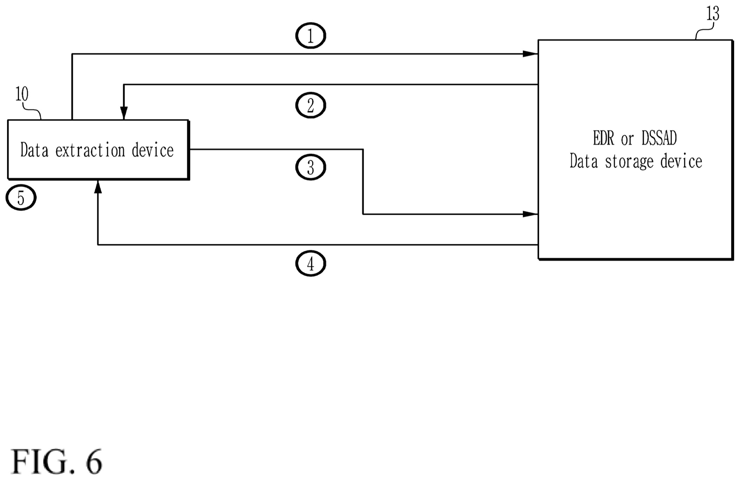

FIG. 6 is a diagram illustrating a DSSAD data extraction system according to one example.

Referring to FIG. 6, the procedure for generating the EDR-linked DSSAD report may be as follows. When the EDR data request may be made from the data extraction device 10 to the EDR and DSSAD data storage device 13 (①), the EDR data may be obtained (②) from the EDR and DSSAD data storage device 13. Next, the DSSAD data linked to the EDR may be requested (③) from the data extraction device 10 to the EDR and DSSAD data storage device 13, and the DSSAD data may be transmitted (④) from the EDR and DSSAD data storage device 13 to the data extraction device 10 according to the request. Thereafter, the data extraction device 10 extracts all DSSAD data within -30 seconds of the EDR occurrence time among the entire DSSAD data (⑤). However, if there may be no EDR trigger information in the DSSAD data, only the DSSAD data closest to the EDR reference time may be displayed.

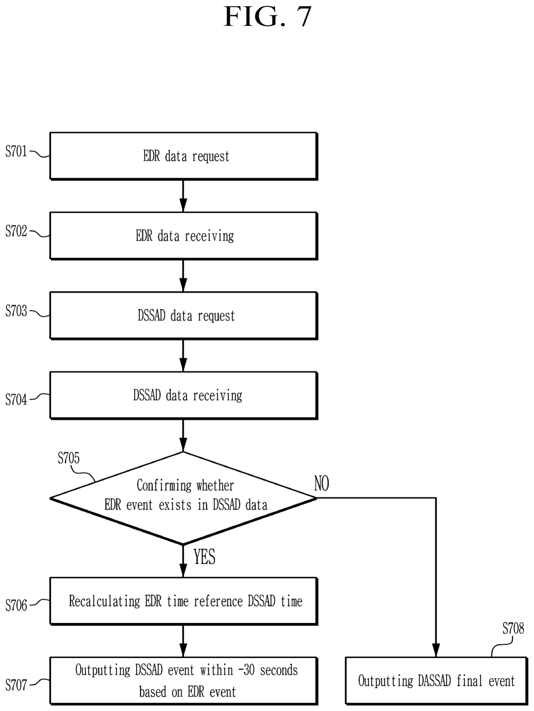

FIG. 7 is a diagram for explaining a DSSAD data extraction method according to one example.

Referring to FIG. 7, the DSSAD data extraction method according to one example may be performed in the DSSAD data extraction system including a data extraction device 10, an EDR data storage device 11, and a DSSAD data storage device 12.

The method includes transmitting an EDR data request to an EDR data storage device 11 by a data extraction device 10 (S701), receiving the EDR data from the EDR data storage device 11 (S702), transmitting a DSSAD data request to a DSSAD data storage device 12 by the data extraction device 10 (S703), receiving the DSSAD data from the DSSAD data storage device 12 (S704), specifying the DSSAD data to be analyzed from the received DSSAD data by the data extraction device 10, determining whether an event corresponding to the EDR data exists in the DSSAD data to be analyzed by the data extraction device 10 (S705), recalculating a recording time of the DSSAD data using the event occurrence time of the EDR data as a reference value when it may be determined that the event corresponding to the EDR data exists in the DSSAD data to be analyzed by the data extraction device 10 (S706), and extracting the DSSAD data where the recording time may be included within a predetermined time range (e.g., -30 seconds) based on the event occurrence time of the EDR data in the DSSAD data to be analyzed by the data extraction device 10 (S707).

The method may further include extracting the DSSAD data closest in time to a point prior to the predetermined time range from the DSSAD data to be analyzed by the data extraction device 10 if it may be determined that there may be no event corresponding to the EDR data in the DSSAD data to be analyzed (S708).

In some examples, the received DSSAD includes the DSSAD data having different regional attributes for each occurrence region, and specifying the DSSAD data to be analyzed may include specifying the DSSAD data having the same regional attribute as the incident occurrence region of the EDR data in the received DSSAD data as the DSSAD data to be analyzed by the data extraction device 10. In some examples, the regional attribute may be determined based on the country in which the EDR data occurred.

In some examples, transmitting the DSSAD data request to the DSSAD data storage device 12 and receiving the DSSAD data from the DSSAD data storage device 12 by the data extraction device 10 may include transmitting the DSSAD data request to the DSSAD data storage device 12 with the information regarding the regional attribute that may be the same as the event occurrence region of the EDR data by the data extraction device 10, and receiving, from the DSSAD data storage device 12, the DSSAD data that may be limited to the regional attribute that may be the same as the event occurrence region of the EDR data by data extraction device 10.

In some examples, the method may further include generating a DSSAD report linked with the EDR data based on the extracted DSSAD data by the data extraction device 10. In some examples, the recording time of the DSSAD data displayed in the DSSAD report may be represented as a difference value from the event occurrence time of the EDR data.

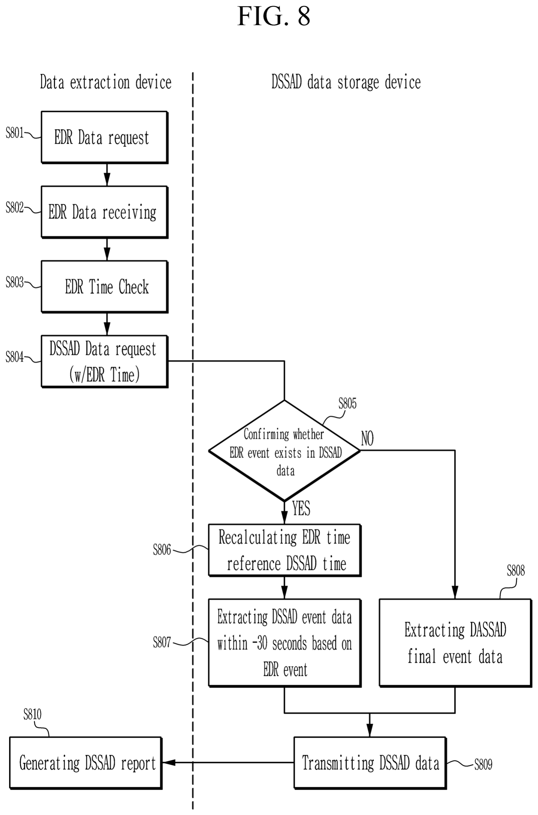

FIG. 8 is a diagram for explaining a DSSAD data extraction method according to one example.

Referring to FIG. 8, a DSSAD data extraction method according to one example may be performed in a DSSAD data extraction system including a data extraction device 10, an EDR data storage device 11, and a DSSAD data storage device 12.

The method may include transmitting an EDR data request to an EDR data storage device 11 by the data extraction device 10 (S801), receiving the EDR data from the EDR data storage device 11 (S802), confirming an event occurrence time of the EDR data by the data extraction device 10 (S803), transmitting the DSSAD data request together with information about the event occurrence time of the EDR data to the DSSAD data storage device 12 by the data extraction device 10 (S804), specifying the DSSAD data to be analyzed from the included DSSAD data by the DSSAD data storage device 12, determining whether an event corresponding to the EDR data exists in the DSSAD data to be analyzed by the DSSAD data storage device 12 (S805), if it may be determined that the EDR data exists in the DSSAD data to be analyzed, recalculating a recording time of the DSSAD data using the event occurrence time of the EDR data as a reference value by the DSSAD data storage device 12 (S806), extracting the DSSAD data, in which the recording time may be included within a predetermined time range (for example, -30 seconds) based on the event occurrence time of the EDR data from the DSSAD data to be analyzed by the DSSAD data storage device 12 (S807), and transmitting the extracted DSSAD data to the data extraction device 10 by the DSSAD data storage device 12 (S809).

The method may further include, if it may be determined that there may be no event corresponding to the EDR data in the DSSAD data to be analyzed, extracting the DSSAD data closest in time to a point prior to the predetermined time range from the DSSAD data to be analyzed by the DSSAD data storage device 12 (S808).

In some examples, the DSSAD being held includes the DSSAD data having different regional attributes for each occurrence region, and specifying the DSSAD data to be analyzed may include specifying the DSSAD data having the same regional attribute as the incident occurrence region of the EDR data in the DSSAD data being held as the DSSAD data to be analyzed by the DSSAD data storage device 12. In some examples, the regional attribute may be determined based on the country in which the EDR data occurred.

In some examples, transmitting the DSSAD data request to the DSSAD data storage device 12 together with the information regarding the event occurrence time of the EDR data by the data extraction device 10 may include transmitting the DSSAD data request to the DSSAD data storage device 12 together with the information regarding the event occurrence time of the EDR data and the information regarding the regional attribute identical to the event occurrence region of the EDR data by the data extraction device 10.

In some examples, the method may further include generating a DSSAD report linked with the EDR data based on the DSSAD data received from the DSSAD data storage device 12 by the data extraction device 10 (S810). In some examples, the recording time of the DSSAD data displayed in the DSSAD report may be represented as a difference value from the event occurrence time of the EDR data.

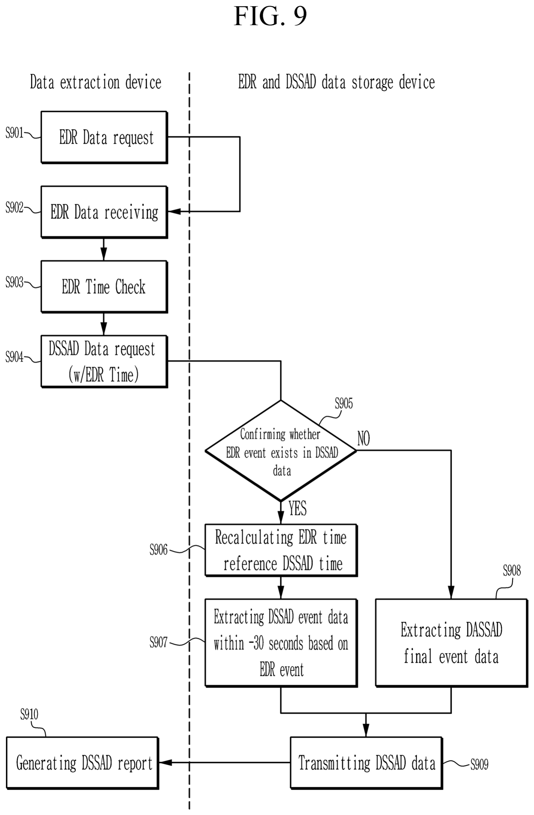

FIG. 9 is a diagram for explaining a DSSAD data extraction method according to one example.

Referring to FIG. 9, a DSSAD data extraction method according to one example may be performed in a DSSAD data extraction system including a data extraction device 10 and an EDR and a DSSAD data storage device 13.

The method includes transmitting an EDR data request to an EDR and DSSAD data storage device 13 by the data extraction device 10 (S901), receiving an EDR data from the EDR and DSSAD data storage device 13 (S902), confirming an event occurrence time of the EDR data by the data extraction device 10 (S903), transmitting a DSSAD data request together with information about an event occurrence time of the EDR data to the EDR and DSSAD data storage device 13 by the data extraction device 10 (S904), specifying a DSSAD data to be analyzed from the held DSSAD data by the EDR and DSSAD data storage device 13, determining whether an event corresponding to the EDR data exists in the DSSAD data to be analyzed by the EDR and DSSAD data storage device 13 (S905), if it may be determined that the EDR data exists in the DSSAD data to be analyzed, recalculating the recording time of the DSSAD data based on the event occurrence time of the EDR data as a reference value by the EDR and DSSAD data storage device 13 (S906), extracting the DSSAD data of which the recording time may be included within a predetermined time range (for example, -30 seconds) based on the event occurrence time of the EDR data from the DSSAD data to be analyzed by the EDR and DSSAD data storage device 13 (S907), and transmitting the extracted DSSAD data to the data extraction device 10 by the EDR and DSSAD data storage device 13 (S909).

The method may further include, if it may be determined that there may be no event corresponding to the EDR data in the DSSAD data to be analyzed, extracting the DSSAD data closest in time to a point prior to the predetermined time range from the DSSAD data to be analyzed by the EDR and DSSAD data storage device 13 (S908).

In some examples, the DSSAD being held includes the DSSAD data having different regional attributes for each occurrence region, and specifying the DSSAD data to be analyzed may include specifying the DSSAD data having the same regional attribute as the incident occurrence region of the EDR data in the DSSAD data being held as the DSSAD data to be analyzed by the EDR and DSSAD data storage device 13. In some examples, the regional attribute may be determined based on the country in which the EDR data occurred.

In some examples, transmitting the DSSAD data request to the EDR and DSSAD data storage device 13 together with the information regarding the event occurrence time of the EDR data by the data extraction device 10 may include transmitting the DSSAD data request to the EDR and DSSAD data storage device 13 together with the information regarding the event occurrence time of the EDR data and the information regarding the regional attribute identical to the event occurrence region of the EDR data by the data extraction device 10.

In some examples, the method further includes generating a DSSAD report linked to the EDR data based on the DSSAD data received from the EDR and DSSAD data storage device 13 by the data extraction device 10 (S910), and the recording time of the DSSAD data displayed in the DSSAD report may be expressed as a difference value from the event occurrence time of the EDR data.

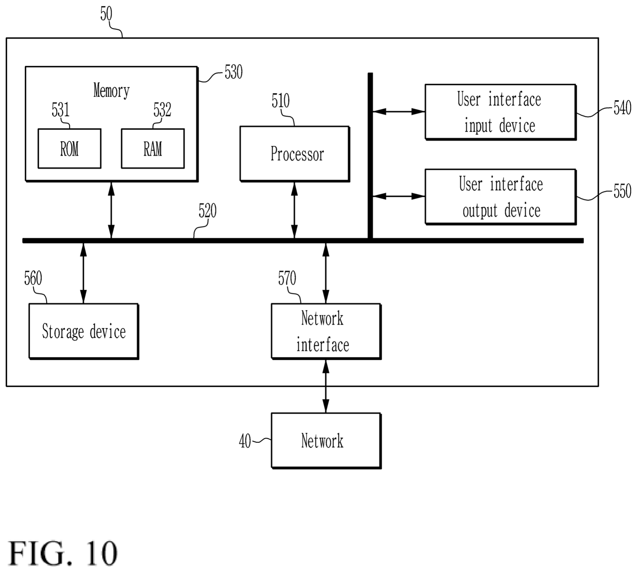

FIG. 10 is a drawing for explaining a computing device according to one example.

Referring to FIG. 10, a DSSAD data extraction method according to examples may be implemented using a computing device 50. These computing devices 50 may be implemented as various types of electronic devices, servers or similar devices, and their functions may be implemented through a combination of a software and a hardware.

The computing device 50 may include at least one of a processor 510, a memory 530, a user interface input device 540, a user interface output device 550, and a storage device 560 communicating via a bus 520. The computing device 50 may also include a network interface 570 electrically connected to a network 40. The network interface 570 may transmit or receive signals with other entities via the network 40.

The processor 510 may be implemented as various types of computational units, such as an MCU (Micro Controller Unit), an AP (Application Processor), a CPU (Central Processing Unit), a GPU (Graphic Processing Unit), an NPU (Neural Processing Unit), a QPU (Quantum Processing Unit), etc. The processor 510 may be a semiconductor device that executes instructions stored in the memory (530) or the storage device 560 and may play a key role in the system. Program codes and data stored in the memory 530 or the storage device 560 instruct the processor 510 to perform specific tasks, thereby enabling the overall operation of the system. The processor 510 may be configured to implement various functions and methods described above with respect to FIG. 1 to FIG. 9.

The memory 530 and the storage device 560 may include various forms of volatile or non-volatile storage media for storing and accessing the data of the system. For example, the memory 530 may include a read-only memory (ROM) 531 and a random-access memory (RAM) 532. In some examples, the memory 530 may be built into the processor (510), in which case data transfer speeds between the memory 530 and the processor 510 may be very fast. In some other examples, the memory (530) may be located external to the processor (510), in which case the memory (530) may be connected to the processor (510) via various data buses or interfaces. This connection can be made through a variety of already known means, for example, the Peripheral Component Interconnect Express (PCIe) interface for highspeed data transfer or through a memory controller.

In some examples, at least some of the components or functions of the DSSAD data extraction methods according to the examples may be implemented as a program or software running on a computing device 50, and the program or software may be stored on a computer-readable recording medium or storage medium. Specifically, a computer-readable recording medium or storage medium according to an example may be a computer having recorded thereon a program for causing a computer including the processor 510 that executes a program or command stored in the memory 530 or the storage device 560 to execute steps included in the implementation of the DSSAD data extraction method according to the examples.

In some examples, at least some of the components or functions of the DSSAD data extraction methods according to the examples may be implemented using hardware or circuitry of the computing device 50, or may be implemented as separate hardware or circuitry that can be electrically connected to the computing device 50.

According to examples, the DSSAD data may be linked and extracted together with the EDR data extraction.

While this disclosure has been described in connection with what may be presently considered to be practical exemplary examples, it may be to be understood that the disclosure may be not limited to the disclosed examples, but, on the contrary, may be intended to cover various modifications and equivalent arrangements included within the spirit and scope of the appended claims.

## Claims

1. A method performed by an apparatus of a Data Storage System for Automated Driving (DSSAD) data extraction system, the method comprising:
transmitting, by a processor of the DSSAD data extraction system, an Event Data Recorder (EDR) data request to an EDR data storage device of the DSSAD data extraction system;
receiving EDR data from the EDR data storage device;
transmitting, by the processor, a DSSAD data request to a DSSAD data storage device of the DSSAD data extraction system;
receiving DSSAD data from the DSSAD data storage device;
specifying, by the processor, the DSSAD data to be analyzed from the received DSSAD data;
determining, by the processor, whether an event corresponding to the EDR data exists in the DSSAD data to be analyzed; and
extracting, by the processor, from the DSSAD data, and based on determining that an event corresponding to the EDR data exists in the DSSAD data to be analyzed, a portion of the DSSAD data where a recording time is included within a predetermined time range, wherein the predetermined time range is based on an event occurrence time of the event.

2. The method of claim 1, further comprising:
extracting, by the processor, from second DSSAD data, and based on determining that an event corresponding to second EDR data does not exist in the second DSSAD data to be analyzed, a portion of the second DSSAD data closest in time to a point prior to a second predetermined time range, wherein the second predetermined time range is based on a second event occurrence time of a second event corresponding to the second EDR data.

3. The method of claim 1 or 2, wherein the received DSSAD includes DSSAD data having different regional attributes for each occurrence region, and
wherein the specifying the DSSAD data to be analyzed includes specifying, by the processor, a first portion of the DSSAD data having the same regional attribute as an incident occurrence region of the EDR data from the received DSSAD data as the DSSAD data to be analyzed, wherein, optionally,
the regional attribute is determined according to a country where the event of the EDR data occurred.

4. The method of anyone of claims 1-3,
wherein the transmitting the DSSAD data request to the DSSAD data storage device comprises transmitting, by the processor, the DSSAD data request to the DSSAD data storage device together with information on the same regional attribute as an incident occurrence region of the EDR data; and
wherein the receiving the DSSAD data from the DSSAD data storage device comprises receiving, by the processor and from the DSSAD, the DSSAD data limited to the regional attribute identical to an event occurrence region of the EDR data.

5. The method of anyone of claims 1-4, further comprising:
generating, by the processor and based on the extracted DSSAD data, a DSSAD report linked to the EDR data, wherein, optionally,
the recording time of the DSSAD data displayed in the DSSAD report is output as a difference value from the event occurrence time of the EDR data.

6. A method performed by an apparatus of a Data Storage System for Automated Driving (DSSAD) data extraction system, the method comprising:
transmitting, by a processor of the DSSAD data extraction system, an Event Data Recorder (EDR) data request to an EDR data storage device of the DSSAD data extraction system;
receiving EDR data from the EDR data storage device;
confirming, by the processor, an event occurrence time of the EDR data;
transmitting, by the processor and to a DSSAD data storage device of the DSSAD data extraction system:
a DSSAD data request, and
information regarding the event occurrence time of the EDR data;
specifying, by the DSSAD data storage device, the DSSAD data to be analyzed from the DSSAD data;
determining, by the DSSAD data storage device, whether an event corresponding to the EDR data exists in the DSSAD data to be analyzed;
extracting, by the DSSAD data storage device, from the DSSAD data, and based on determining that the EDR data exists in the DSSAD data to be analyzed, a portion of the DSSAD data where a recording time is included within a predetermined time range, wherein the predetermined time range is based on the event occurrence time of the EDR data to be analyzed; and
transmitting, by the DSSAD data storage device, the extracted DSSAD data to the processor.

7. The method of claim 6, further comprising:
extracting, by the DSSAD data storage device and based on determining that an event corresponding to second EDR data does not exist in second DSSAD data to be analyzed, a portion of the second DSSAD data closest in time to a point prior to a second predetermined time range from the second DSSAD data to be analyzed, wherein the second predetermined time range is based on a second event occurrence time of the event corresponding to the second EDR data.

8. The method of claim 6 or 7, wherein the DSSAD data comprises different regional attributes for each occurrence region, and
wherein the specifying the DSSAD data to be analyzed comprises specifying, by the DSSAD data storage device, the DSSAD data having the same region attribute as an incident occurrence region of the EDR data from the DSSAD data held as the DSSAD data to be analyzed, wherein, optionally,
the regional attribute is determined based on a country where the event of the EDR data occurred.

9. The DSSAD data extraction method of anyone of claims 6-8,
wherein the transmitting the DSSAD data request to the DSSAD data storage device comprises transmitting, by the processor, the DSSAD data request to the DSSAD data storage device together with information on the same regional attribute as an incident occurrence region of the EDR data; and
wherein the receiving the DSSAD data from the DSSAD data storage device comprises receiving, by the processor and from the DSSAD data storage device, the DSSAD data limited to the regional attribute identical to an event occurrence region of the EDR data.

10. The method of anyone of claims 6-9, further comprising:
generating, by the processor and based on the DSSAD data received from the DSSAD data storage device, a DSSAD report linked to the EDR data, wherein, optionally,
the recording time of the DSSAD data displayed in the DSSAD report is output as a difference value from the event occurrence time of the EDR data.

11. A computing device configured to manage data during automated driving of a vehicle, the computing device comprising:
one or more processors, and
memory sorting instructions that, when executed by the one or more processors, cause the computing device to:
receive, from an event data recorder associated with the vehicle, event data corresponding a vehicle event;
receive, from Data Storage System for Automated Driving (DSSAD) system, DSSAD data indicating one or more measurements of autonomous driving of the vehicle;
identify, based on the event data, time information of an event data recorder trigger, wherein the time information is associated with at least one of:
a start time corresponding to the vehicle event; or
an end time corresponding to the vehicle event;
extract, from the DSSAD data, based on the time information of the event data recorder trigger, a portion of the DSSAD data; and
transmit, based on the portion of the DSSAD data, information indicating the one or more measurements of the autonomous driving of the vehicle during the vehicle event.

12. The computing device of claim 11, wherein the instructions, when executed by the one or more processors, cause the computing device to transmit the information indicating the one or more measurements of the autonomous driving of the vehicle during the vehicle event by causing the computing device to transmit an indication of a time difference between time information associated with the portion of the DSSAD data and the time information of the event data recorder trigger.

13. The computing device of claim 11 or 12, wherein the one or more measurements of autonomous driving of the vehicle indicate a degree of autonomous driving of the vehicle.

14. The computing device of anyone of claims 11-13, wherein the instructions, when executed by the one or more processors, cause the computing device to extract the portion of the DSSAD data by retrieving DSSAD data beginning a predetermined time range before a time point corresponding to the time information of the event data recorder trigger.

15. The computing device of anyone of claims 11-14, wherein the instructions, when executed by the one or more processors, cause the computing device to:
identify vehicle event in the event data by identifying a last event in the event data, wherein, optionally, the instructions, when executed by the one or more processors, cause the computing device to extract the portion of the DSSAD data based on a geographical location of the vehicle.
